(19) Europäisches Patentamt

European Patent Office

Office européen des brevets

(11) **EP 3 783 542 A1**

(12) **EUROPEAN PATENT APPLICATION**

(43) Date of publication:
**24.02.2021 Bulletin 2021/08**

(51) Int Cl.:
**G06N 5/02** (2006.01)          **G06N 5/04** (2006.01)

(21) Application number: **19193225.0**

(22) Date of filing: **23.08.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Robert Bosch GmbH
70442 Stuttgart (DE)**

(72) Inventors:
• **Gad-Elrab, Mohamed**
  **66111 Saarbruecken (DE)**
• **Stepanova, Daria**
  **71272 Renningen (DE)**
• **Stroetgen, Jannik**
  **76135 Karlsruhe (DE)**
• **Tran, Trung Kien**
  **89073 Ulm (DE)**
• **Kharlamov, Evgeny**
  **81829 Muenchen (DE)**

(54) **A METHOD FOR COMPUTING EXPLANATIONS FOR INCONSISTENCY IN ONTOLOGY-BASED DATA SETS**

(57)    The disclosure relates to a computer-implemented method (100) for computing inconsistency explanations (E) in a first data set (KG), enhanced with an ontology (O), the first data set (KG) comprising data elements, called individuals (a, b, d, e, f, g, h), and facts about said individuals; wherein said facts are expressed according to an ontology language in terms of class assertions (C(a), C(d), B(f), B(g)) and/or property assertions (R(a, b), S(d, f), T(f, h)), wherein a class assertion relates one individual (a,b,d,e,f,g,h) with a class (A, B, C, D) and a property assertion relates one individual (a,b,d,e,f,g,h) with a second individual (a,b,d,e,f,g,h), the ontology (O) comprising a formal explicit description of said classes (A, B, C, D) and/or said properties (R, S, T) and further comprising axioms (ax1, ax2, ax3) about said classes (A, B, C, D) and/or properties (R, S, T);
wherein the method comprises the steps of:
constructing (120) a second data set (KG') being an abstract description of said first data set (KG);
computing (130) inconsistency explanations (E') in said second data (KG') set with regard to said axioms of said ontology (O), and
computing (140) inconsistency explanations (E) for said first data set (KG) with regard to said ontology (O) based on said computed inconsistency explanations (E') in said second data set (KG').

Fig. 4

process flow
- - - - data flow

EP 3 783 542 A1

**Description**

Background

Knowledge graphs are mainly used for graph-based knowledge representation by describing (real world) entities and their relations.

The present invention relates to a computer-implemented method for computing inconsistency explanations in such knowledge graphs.

Knowledge graphs are often enhanced with ontologies that consist of schema axioms defining classes and relations which describe the data in the knowledge graphs.

Knowledge graphs are often automatically constructed, e.g. from text, and thus often inconsistent with respect to the accompanied ontologies. Computing explanations for inconsistency requires logical reasoning which is computationally demanding and thus problematic for large-scale real world knowledge graphs which may contain millions and billions of facts.

Disclosure of the invention

Therefore, it is a goal of the present invention to provide a method for computing inconsistency explanations in large-scale knowledge graphs, herein referred to as a first data set.

According to one embodiment of the present invention, there is provided a computer-implemented method for computing inconsistency explanations in a first data set enhanced with an ontology, the first data set comprising data elements, called individuals, and facts about said individuals; wherein said facts are expressed according to an ontology language in terms of class assertions and/or property assertions, wherein a class assertion relates one individual with a class and a property assertion relates one individual with a second individual, the ontology comprising a formal explicit description of said classes and/or said properties and further comprising axioms about said classes and/or properties; wherein the method comprises the steps of:

constructing a second data set being an abstract description of said first data set; computing inconsistency explanations in said second data set with regard to said axioms of said ontology, and
computing inconsistency explanations for said first data set with regard to said ontology based on said computed inconsistency explanations in said second data set.

The first data set comprises a plurality of facts about entities, in the following also referred to as unary and/or binary facts about said entities, wherein a unary fact allocates an individual to a class and a binary fact relates one individual to another individual.

The ontology encompasses a representation, formal naming and definition of the individuals, classes and properties that substantiate a respective domain of discourse. The ontology comprises a formal explicit description of classes and/or properties and axioms about said classes and/or properties.

Inconsistency means that there exists a contradiction between one or more facts in the first data set and one or more axioms in the ontology.

Preferably, the abstraction of the first data set, the second data set, is smaller than the original first data set.

Preferably, the step of computing inconsistency explanations in said second data set with regard to said axioms of said ontology is executed by a semantic reasoner, also known as reasoning engine, rules engine, or simply as a reasoner, by inferring logical consequences from said facts and axioms.

The step of computing inconsistency explanations for said first data set based on said computed inconsistency explanations in said second data set is a reconstruction of the inconsistency explanations for said first data set from the computed inconsistency explanations in said second data set.

The method efficiently computes inconsistency explanations by using abstractions of the first data set to decide whether inconsistency exists. Further, the method uses abstractions to compute inconsistency explanations for the first data set.

According to an embodiment the step of constructing the second data set further comprises constructing abstract class assertions and/or abstract property assertions about said individuals of said first data set, wherein said abstract class assertions and/or said abstract property assertions comprise an abstract description of class assertions and/or property assertions based on representative variables of said individuals, wherein individuals occurring in similar class assertions and/or similar property assertions are represented by the same representative variable.

Preferably, the method further comprises the step of identifying at least one local type for at least one of the individuals and/or an abstraction for the at least one local type, wherein a local type consists of a set of classes occurring in class assertions of said individual and/or sets of properties occurring in property assertions of said individual and wherein the abstraction for the at least one local type is based on representative variables. Preferably, the abstraction for the at least one local type is a star-shaped abstraction.

Preferably, the method further comprises the step of identifying at least one superior local type for at least one of the individuals, for example a maximal local type, and/or at least one abstraction for the superior local type, for example an abstraction for the maximal local type, wherein a superior local type is superior to the local type of said individual if each set of classes and/or each set of properties in said superior local type includes the corresponding set of classes and/or corresponding set of properties in the local type of said individual, and wherein the abstraction for the superior local type is based on representative variables. A maximal local type of an individual in said first data set is maximal if there exist no other local type of another individual in said first data set such that each set in that local type is a proper superset of the corresponding set in the maximal local type.

Preferably, the step of constructing the second data set further comprises constructing at least one abstraction for a superior local type of at least one of the individuals, for example an abstraction for a maximal local type, wherein the abstraction for a superior local type and/or the abstraction for a maximal local type is based on representative variables of said individuals, wherein individuals occurring in similar class assertions and/or similar property assertions are represented by the same representative variable.

Preferably, the step of computing inconsistency in said second data set further comprises computing inconsistency explanations in said abstraction for a superior local type, for example in said abstraction for a maximal local type and/or said abstraction for a local type.

Preferably, the method further comprises the step of dividing said data elements of said first data set in a plurality of modules, wherein each module is associated with one respective individual and comprises the entirety of class assertions and/or property assertions of said individuals, wherein the step of constructing said second data set being an abstract description of said first data set is based on said modules.

Preferably, the method further comprises the step of outputting of inconsistency explanations for said first data set and/or inconsistency explanations for said second data set in a comprehensible format.

Preferably, inconsistency explanations for said first data set are obtained from corresponding inconsistency explanations for the said second data set. From the explanations of the second data set, the corresponding explanations of the first data set are obtained by identifying individuals in the first data set that have the same local type with the representative variable in the explanation of the second data set.

Preferably, the first data set and/or the ontology is defined based on a web ontology language, W3C Web Ontology Language, OWL, such as OWL 2.

Preferably, the ontology enhancing the first data set contains at least one of the following axioms of OWL 2 axioms: a subclass axiom SubClassOf(C, D), specifying that class C is a subclass of class D, a subproperty axiom SubObjectPropertyOf(P, S), specifying that P is a sub property of S, or transitive property axiom TransitiveObjectProperty(P), wherein $C_{(i)}$ and $P_{(i)}$, $i \in \{1, 2\}$, satisfy the following grammar definition:

```
          P(i) ::= R | ObjectInverseOf(P)
C(i) ::= owl: Thing | owl: Nothing | A | ObjectComplementOf(C) |
    ObjectIntersectionOf(C1,C2) | ObjectUnionOf(C1, C2) |
          ObjectSomeValuesFrom(P, owl: Thing),
```

wherein R is a property name and A is a class name.

The invention also concerns a computer program comprising computer program code, the computer program code when being executed on a computer enabling said computer to carry out a method according to any of the previous described embodiments.

The invention also concerns an apparatus for computing inconsistency explanations in a first data set enhanced with an ontology, wherein the first data set comprising data elements, called individuals, and facts about said individuals, wherein said facts are expressed according to an ontology language in terms of class assertions and/or property assertions, wherein a class assertion relates one individual with a class and a property assertion relates one individual with a second individual, the ontology comprising a formal explicit description of said classes and/or said properties and further comprising axioms about said classes and/or properties; the apparatus comprising:

means for constructing a second data set being an abstract description of said first data set;
means for computing inconsistency explanations in said second data set with regard to said axioms of said ontology, and
means for computing inconsistency explanations for said first data set with regard to said ontology based on said computed inconsistency explanations in said second data set.

Preferably, the apparatus further comprises means for carrying out the method according to any of the previous described embodiments.

The invention also concerns the use of a method according to any of the previous described embodiments and/or an apparatus according to any of the previous described embodiments and/or a computer program according to any of the previous described embodiments for data cleaning of a first data set enhanced with an ontology.

Further developments of the invention are described below and referencing the drawings in which

Figure 1     depicts schematically a flow diagram of a method for computing inconsistency explanations in a first data set according to an embodiment;

Figure 2     schematically a flow diagram of the method for computing inconsistency explanations in a first data set according to another embodiment;

Figure 3     schematically a flow diagram of the method for computing inconsistency explanations in a first data set according to another embodiment;

Figure 4     schematically a flow diagram of data and processing for computing inconsistency explanations in a first data set;

Figure 5a     schematically an extract of a first data set;

Figure 5b     schematically an extract of an ontology;

Figure 6     schematically an extract of the second data set, assertions in an explanation for inconsistency of the second data set, and assertions in various inconsistency explanations for first data set with respect to the ontology.

Figure 7     a table of results comparing different approaches for computing inconsistency explanations in a first data set, and

Figure 8     schematically a distribution of explanations of inconsistency.

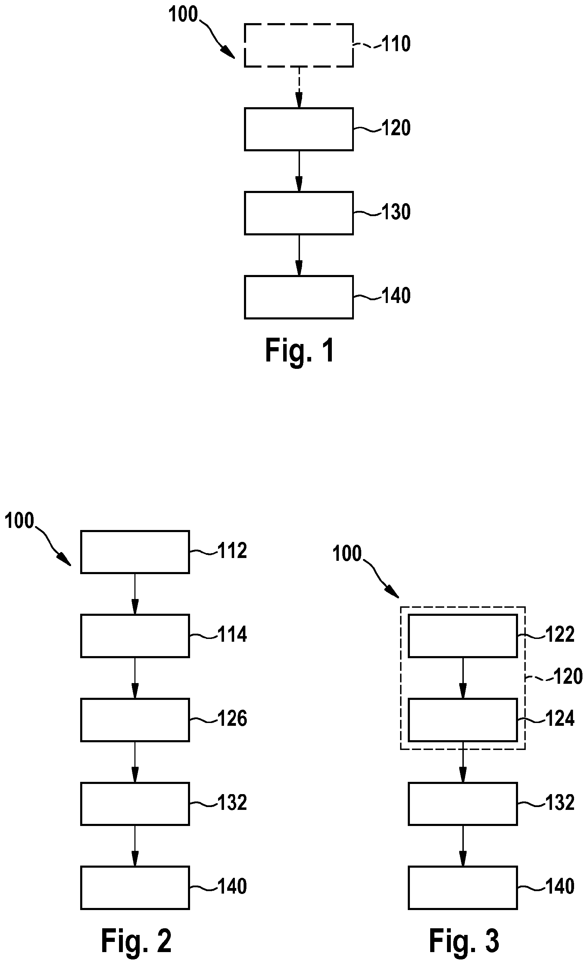

Figures 1 to 3 depict various embodiments of a method 100 for computing inconsistency explanations E in a first data set, also referred to as a knowledge graph, KG, enhanced with an ontology O.

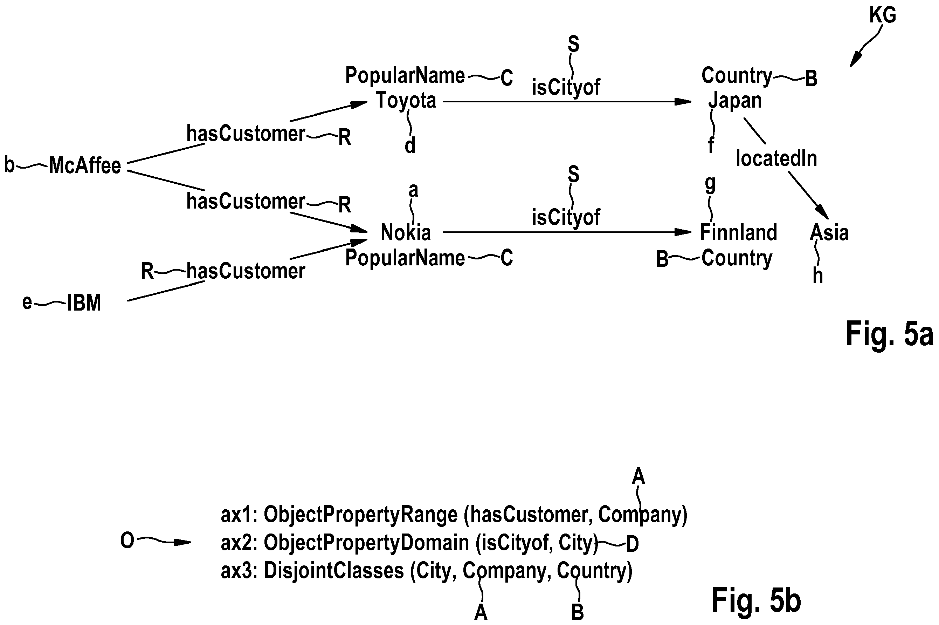

Figure 5a depicts an extract of an exemplary first data set KG. The first data set KG comprises data entities, which comprise individuals a, b, d, e, f, g, h, types, called classes A, B, C, D, and relations, called properties R, S, T about said individuals a, b, d, e, f, g, h.

The facts are expressed according to an ontology language in terms of class assertions, for example $C(a)$, $C(d)$, $B(f)$, $B(g)$, and/or property assertions, for example $R(b, a)$, $S(d, f)$, wherein a class assertion, for example $C(a)$, also referred to as a unary fact, relates one individual a with a class C and a property assertion, for example $R(b,a)$, also referred to as a binary fact, relates the individual b with the second individual a, wherein $A, B, C, D \in N_C$, $N_C$ being a set of class names, $R, S, T \in N_P$, $N_P$ being a set of property names, and $a, b, d, e, f, g, h \in N_I$, $N_I$ being a set of named individuals, or simply called individuals.

Entities refer to individuals, classes, or properties. Individuals refer to concrete things, like instances and objects, for example McAfee, Nokia, Finland, Asia. Classes refer to a collection of individuals having the same attributes, for example Company, Popular Name, City, Country and properties refer to a relation between two individuals , for example hasCostumer, isCityOf, locatedIn.

Preferably, sets $N_C$, $N_P$, $N_I$ are countable pairwise disjoint sets. Consequently, a first data set KG is a finite set of unary and binary facts of the form $C(a)$ and $R(a,b)$.

The ontology O encompasses a representation, formal naming and definition of the individuals, classes and properties that substantiate a respective domain of discourse. The ontology O comprises a formal explicit description of classes and/or properties and axioms about said classes and/or properties.

According to an embodiment, the first data set KG and/or the ontology O is defined based on a web ontology language, W3C Web Ontology Language, OWL, such as OWL 2. The W3C Web Ontology Language, OWL, is designed to represent rich and complex knowledge about things, groups of things, and relations between things. OWL is a computational logic-based language such that knowledge expressed in OWL can be exploited by computer programs. For further specification with regard to the Web Ontology Language OWL 2 reference is made to https://www.w3.org/TR/owl2-overview/.

Preferably, the semantics of the first data set KG and/or the ontology O is defined using the OWL 2 direct model- theoretic semantics via interpretations, wherein reference is made to https://www.w3.org/TR/owl2-direct-semantics/ with regard to direct model- semantics.

According to an embodiment, the ontology accompanying the first data set KG and the second data set KG' contains at least one of the following of OWL 2 axioms:: a subclass axiom SubClassOf(C, D), specifying that class C is a subclass of class D, a subproperty axiom SubObjectPropertyOf(P, S), specifying that P is a sub property of S, or transitive property axiom TransitiveObjectProperty(P), wherein $C_{(i)}$ and $P_{(i)}$, $i \in \{1, 2\}$, satisfy the following grammar definition:

```
                    P(i) ::= R | ObjectlnverseOf(P)
        C(i) ::= owl: Thing | owl: Nothing | A | ObjectComplementOf(C) |
             ObjectIntersectionOf(C1,C2) | ObjectUnionOf(C1, C2) |
                    ObjectSomeValuesFrom(P, owl: Thing),
```

wherein R is a property name, and A is a class name.

Advantageously, the used ontology language OWL2 allows expressing at least one of the following axioms DisjointClasses, InverseObjectProperties, ObjectPropertyDomain, ObjectPropertyRange. Further, the used language allows expressing other types of important OWL 2 axioms such as: DisjointClasses, InverseObjectProperties, ObjectPropertyDomain, ObjectPropertyRange. For example, the axiom ObjectPropertyRange(hasCustomer, Company) of figure 5b can be equivalently expressed by SubClassOf(ObjectSomeValuesFrom(ObjectInverseOf(hasCustomer),owl:Thing), Company).

Figure 5b depicts an extract of the considered ontology O which is defined based on OWL2, comprising exemplarily three axioms, ax1, ax2, ax3. According to figure 5b, the axiom ax1 defines that the range of the property hasCostumer is of the class Company. Axiom ax2 defines that the domain of isCityOf is the class City, and the axiom ax3 defines that classes City, Company and Country are mutually disjoint.

The first data set KG is inconsistent with regard to the ontology O if no model for KG u 0 exists. Preferably, the ontology O is itself consistent. The first data set KG is inconsistent with regard to the ontology O, when at least one fact of KG contradicts at least one axiom of O.

Referring now to figure 5a, in particular to the part of the first data set KG stating that "McAfee hasCustomer Toyota" and "Toyota isCityOf Japan". Axiom ax1 of O defines that the range of the property hasCostumer is Company. Therefore, Toyota is considered as Company. Ax2 defines that the domain of isCityOf is City. Therefore, Toyota is considered as City. According to ax3, City and Company are disjoint classes. Thus, the particular part of the first data set KG stating that "McAfee hasCustomer Toyota" and "Toyota isCityOf Japan" is inconsistent with regard to the Ontology O, in particular with regard to the axioms ax1, ax2, ax3.

An explanation E for inconsistency of KG u 0 denoted by $E = E_{KG} \cup E_O$ with $E_{KG} \subseteq KG$ and $E_O \subseteq 0$, is a smallest subset inclusion inconsistent subset of KG u O.

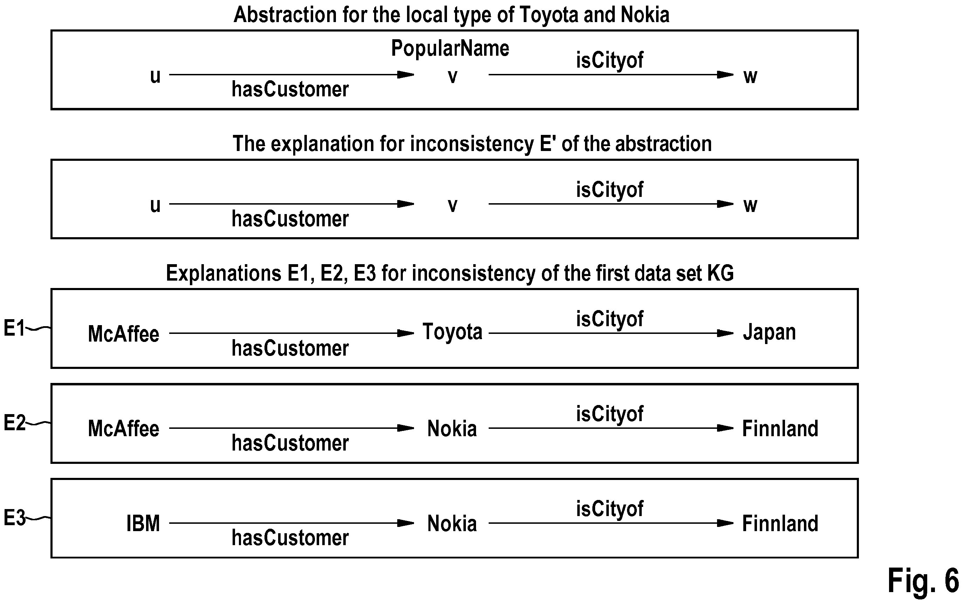

The particular part of the first data set KG stating that "McAfee hasCustomer Toyota" and "Toyota isCityOf Japan" together with the three ontology axioms ax1, ax2, ax3, figure 5b, is an inconsistency explanation as depicted by figure 6.

For large-scale real world knowledge graphs which may contain millions and billions of facts computing of such inconsistency explanations E is computationally demanding. A method 100 for computing inconsistency explanations E in a large-scale first data set KG is described with reference to figure 1, which is a schematic flow diagram of a method 100 for computing inconsistency explanations E in a first data set KG with regard to an ontology O.

In step 120 of method 100 a second data set KG' being an abstract description, also referred to as an abstraction, of said first data set KG is constructed.

The second data set KG' is a compressed representation of the first data set KG, wherein with regard to the Ontology O the following requirements are satisfied:

Requirement R1: KG' preserves KG's consistency, which means the first data set KG is consistent with respect to the ontology O if and only if its abstraction is so.

Requirement R2: KG' preserves KG's explanations: inconsistency explanations for the abstraction, the second data set KG', can be used to obtain exactly all inconsistency explanations for the first data set KG.

Instead of checking consistency and computing the explanations directly on the first data set KG with regard to the ontology O, these operations are performed on its abstraction, the second data set KG'. The requirements R1, R2 guarantee the correctness of the presented method.

Preferably, the abstraction of the first data set KG, the second data set KG', is smaller than the original first data set KG.

Preferably, the step 120 of constructing the second data set KG' further comprises constructing abstract class assertions, for example A(u), B(w), C(v), D(x) and/or abstract property assertions R(u, v), S(v, w), T(x, w) about said individuals a, b, d, e, f, g, h of said first data set KG, wherein said abstract class assertions A(u), B(w), C(v), D(x) comprise an abstract description of said class assertions C(a), C(d), B(f), B(g) and/or said abstract property assertions R(u,v), S(v,w), T(x,w) comprise an abstract description of said property assertions R(a, b), S(d, f), T(f, h) based on representative variables u,v,w,x of said individuals a, b, d, e, f, g, h, wherein individuals a, b, d, e, f, g, h occurring in similar class assertions C(a), C(d), B(f), B(g) and/or similar property assertions R(a,b), S(d, f), T(f, h) are represented by the same representative variable u, v, w, x, wherein A, B, C, D $\in N_C$, $N_C$ being a set of class names, R, S, T $\in N_P$, $N_P$ being a set of property names, and u,v, w, x $\in N_V$, $N_V$ being a countable set of variable individuals. Preferably, $N_V$ is disjoint from $N_C$, $N_P$, $N_I$.

The second data set KG' is an abstract description of the first data set KG. Consequently, the second data set KG' is a finite set of concept assertions and/or property assertions of the representative variables, for example, unary and binary facts of the form A(u), B(w), C(v), D(x) and R(u, v), S(v, w), T(x, w).

In second data set KG', being an abstraction of the first data set KG of figure 5a, for example the individual d, Toyota, and the individual a, Nokia, are represented by the representative variable v, which in this case is a representative variable for all individuals of the class C, Popular Name, and having an incoming relation hasCustomer and an outgoing relation isCityOf.

In a step 130 inconsistency explanations E' in said second data set KG' with regard to said ontology O are computed.

Preferably, the step 130 of computing inconsistency in said second data set with regard to said axioms of said ontology is executed by a semantic reasoner, also known as reasoning engine, rules engine, or simply as a reasoner, by inferring logical consequences from data elements of the second data set KG' and axioms of the ontology O, for example ax1, ax2, ax3.

In step 140 inconsistency explanations E for said first data set KG based on said computed inconsistency explanations E' in said second data KG' set are computed.

According to an embodiment, the method comprises an optional step 110 of dividing said data elements of said first data set KG in a plurality of modules M, wherein each module M is associated with one respective individual a, b, d, e, f, g, h and comprises the entirety $\alpha$ of class assertions and/or property assertions of said individual a, b, d, e, f, g, h, wherein the step of constructing said second data set KG' being an abstract description of said first data set KG is based on said modules M.

The module M of the individual a with regard to KG is the set of facts $\alpha$ in which a participates, i.e. M(a, KG) = $\{\alpha \mid \alpha \in$ KG and a occurs in $\alpha\}$. Referring to figure 5a, the module of Nokia is M(Nokia, KG) = {PopularName(Nokia), hasCustomer (McAfee, Nokia), isCityOf(Nokia, Finland)} = {C(a), R (b, a), S(a, g)}.

Figure 2 depicts schematically a flow diagram of a method 100 according to a further embodiment.

In step 112 at least one local type $\tau$ for at least one of the individuals a, b, d, e, f, g, h in the first data set KG is identified, wherein a local type $\tau$ consists of a set of classes occuring in class assertions C(a), C(d), B(f), B(g) of said individual a, b, d, e, f, g, h and/or sets of properties occuring in property assertions R(a, b), S(d, f), T(f, h) of said individual a, b, d, e, f, g, h.

A local type $\tau$ of an individual a of first data set KG, $\tau$(a, KG), or simply $\tau$(a) when KG is clear from the context, is defined by $\tau(a) = \langle \tau_i(a), \tau_c(a), \tau_o(a)\rangle$, where $\tau_i(a) = \{R \mid R(c,a) \in$ KG$\}$, $\tau_c(a) = \{A \mid A(a) \in$ KG$\}$ and $\tau_o(a) = \{S \mid S(a,b) \in$ KG$\}$.

In step 114 of at least one superior local type $\tau'$ for at least one of the individuals a, b, d, e, f, g, h, for example a maximal local type $\tau_{max}$, is identified, wherein a superior local type $\tau'$ is superior to the local type $\tau$ of said individual a, b, d, e, f, g, h if each set of classes and/or each set of properties in said superior local type $\tau'$ includes the corresponding set of classes and/or corresponding set of properties in the local type $\tau$ of said individual a, b, d, e, f, g, h. A maximal local type $\tau_{max}$ of an individual in said first data set KG is maximal if there exist no other local type $\tau$ of another individual in said first data set KG such that each set in that local type $\tau$ is a proper superset of the corresponding set in the maximal local type $\tau_{max}$.

In step 126 at least one abstraction abs($\tau'$) for the at least one superior local type of at least one of the individuals a, b, d, e, f, g, h, for example an abstraction abs($\tau_{max}$) for a maximal local type, is constructed, wherein the abstraction abs($\tau'$) for a superior local type $\tau'$ and/or the abstraction abs($\tau_{max}$) for a maximal local type $\tau_{max}$ is based on representative variables u, v, w, x of said individuals a, b, d, e, f, g, h, wherein individuals a, b, d, e, f, g, h occurring in similar class assertions C(a), C(d), B(f), B(g) and/or similar property assertions R(a,b), S(d, f), T(f, h) are represented by the same representative variable u, v, w, x.

Preferably, the abstraction abs($\tau'$) and/or the abstraction abs($\tau_{max}$) comprises a star shape.

An abstraction for a local type $\tau$ is defined by abs($\tau$) = $\{A(v_\tau) \mid A \in \tau_c\} \cup$

$$\{R(u_\tau^R, v_\tau) \mid R \in \tau_i\} \cup \{S(v_\tau, w_\tau^S) \mid S \in \tau_o\}, \text{ wherein } v_\tau, u_\tau^R, w_\tau^S \text{ are unique variables from } N_v \text{ for each } \tau, R, S \text{ and } v_\tau.$$

In step 132 inconsistency explanations E' for said abstraction abs($\tau$) and/or abstraction abs($\tau'$) and/or abstraction

abs($\tau_{max}$) of said local type $\tau$ with respect to the augmented ontology O are computed.

Preferably, the step 132 of computing inconsistency in the abstraction abs($\tau$) and/or abstraction abs($\tau$') and/or abstraction abs($\tau_{max}$) with regard to the axioms of the ontology O is executed by a semantic reasoner, also known as reasoning engine, rules engine, or simply as a reasoner, by inferring logical consequences from the said abstractions and axioms of the ontology O, for example ax1, ax2, ax3.

Preferably, the second data set KG' consists of small disconnected partitions, one for each representative variable. When considered as a graph, each partition has a star-like structure with the representative variable in the center and incoming, respectively outgoing, edges that are labelled with properties that are pairwise distinct. In addition to the aforementioned size reduction, these disconnected simple structures limit the possibilities of inference propagation and thus reduces the complexity of the task of the reasoning component.

According to an embodiment an off-the-shelf reasoner, for example Pellet, is used for computing the inconsistency explanations.

In step 140 inconsistency explanations E for said first data set KG based on said computed inconsistency explanations E' in said second data set KG' are computed.

According to a further embodiment, the method 100 according to the embodiment depicted by figure 2 comprises an optional step 110 (not shown) of dividing said data elements of said first data set KG in a plurality of modules M, wherein each module M is associated with one respective individual, for example a, b, d, e, f, g, h, and comprises the entirety $\alpha$ of class assertions and/or property assertions of said individual a, b, d, e, f, g, h, wherein the step of constructing said second data set KG' being an abstract description of said first data set KG is based on said modules M. Further, the step 112 of identifying at least one local type $\tau$ for each individual, for example a, b, d, e, f, g, h, wherein a local type $\tau$ consists of sets of classes and properties in the assertions and/or property assertions said individual a, b, d, e, f, g, h is asserted to, might be applied to the modules M.

Figure 3 depicts schematically a flow diagram of a method 100 according to a further embodiment.

The step 120 of constructing a second data set KG' being an abstract description of said first data set KG corresponds to step 120 as already described with regard to figure 1.

In step 122 at least abstraction abs($\tau$) for the at least one local type $\tau$ is identified, wherein a local type $\tau$ consists of a set of classes occurring in class assertions C(a), C(d), B(f), B(g) of said individual a, b, d, e, f, g, h and/or sets of properties occurring in property assertions R(a, b), S(d, f), T(f, h) of said individual a, b, d, e, f, g, h and wherein the abstraction abs($\tau$) for the at least one local type $\tau$ is based on representative variables u,v,w,x.

In step 124 at least one abstraction abs($\tau$') for the superior local type $\tau$', for example an abstraction abs($\tau_{max}$) for the maximal local type $\tau_{max}$, is identified, wherein a superior local type $\tau$' is superior to the local type $\tau$ of said individual a, b, d, e, f, g, h if each set of classes and/or each set of properties in said superior local type $\tau$' includes the corresponding set of classes and/or corresponding set of properties in the local type $\tau$ of said individual a, b, d, e, f, g, h, and wherein the abstraction abs($\tau$') for the superior local type $\tau$' is based on representative variables u, v, w, x. A maximal local type $\tau_{max}$ of an individual in said first data set KG is maximal if there exist no other local type $\tau$ of another individual in said first data set KG such that each set in that local type $\tau$ is a proper superset of the corresponding set in the maximal local type $\tau_{max}$, and wherein the abstraction abs($\tau_{max}$) for the maximal local type $\tau_{max}$ is based on representative variables u, v, w, x.

In step 132 inconsistency explanations E' in said abstract superior local types abs($\tau$') and/or said abstract local types abs($\tau$) are computed.

Preferably, the step 132 of computing inconsistency in the abstract superior local types abs($\tau$') and/or abstract local types abs($\tau$) set with regard to the axioms of the ontology O is executed by a semantic reasoner, also known as reasoning engine, rules engine, or simply as a reasoner, by inferring logical consequences from data elements of the second data set KG', in particular the abstraction for superior local types abs($\tau$') and/or the abstraction for local types abs($\tau$) and axioms of the ontology O, for example ax1, ax2, ax3.

According to an embodiment an off-the-shelf reasoner, for example Pellet, is used for computing the inconsistency explanations.

In step 140 inconsistency explanations E for said first data set KG based on said computed inconsistency explanations E' in said second data set KG' are computed.

According to a further embodiment, the method 100 according to the embodiment depicted by figure 3 comprises an optional step 110 (not shown) of dividing said data elements of said first data set KG in a plurality of modules M, wherein each module M is associated with one respective individual a, b, d, e, f, g, h and comprises the entirety $\alpha$ of class assertions and/or property assertions of said individual a, b, d, e, f, g, h, wherein the step of constructing said second data set KG' being an abstract description of said first data set KG is based on said modules M. Further, the step 120 of constructing a second data set KG' being an abstract description of said first data set KG might be applied to the modules M, as already described with regard to figure 1.

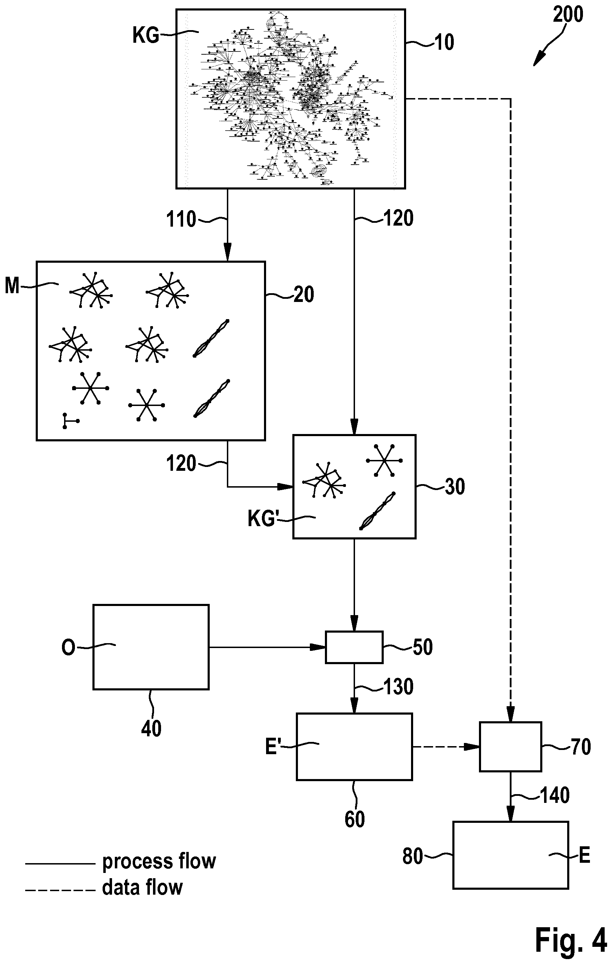

Figure 4 depicts a schematically flow diagram of a method 100 for computing inconsistency explanations in a first data set, wherein the method 100 is carried out by an apparatus 200, with components and the data and processing flows for computing inconsistency explanations in a first data set KG according to an embodiment wherein dashed lines refer to data flow and continuous lines refer to process flow.

Component 10 comprises a storage device for storing data elements of the first data set KG.

Component 20 comprises a storage device and a processing device wherein the processing device is used for processing step 110 of dividing the data elements of the first data set KG in a plurality of modules M, wherein each module M is associated with one respective individual a, b, d, e, f, g, h and comprises the entirety $\alpha$ of class assertions and/or property assertions of said individuals a, b, d, e, f, g, h, wherein the step of constructing said second data set KG' being an abstract description of said first data set KG is based on the modules M. Further, the storage device is used for storing the modules M.

Component 30 comprises a storage device and a processing device wherein the processing device is used for processing step 120 of constructing a second data set KG' being an abstract description of the first data set KG or of the modules M. Preferably, the step 120 of constructing the second data set KG' further comprises constructing abstract class assertions, for example A(u), B(w), C(v), D(x) and/or abstract property assertions R(u, v), S(v, w), T(x, w) about said individuals a, b, d, e, f, g, h of said first data set KG, as described above. Preferably, the processing device of component 30 is suitable for processing the steps of 122, 124 and 126 as described above. Further, the storage device of component 30 is used for storing the constructed abstractions, in form of the second data set KG'.

Component 40 comprises a storage device for storing an ontology O, in particular a formal explicit description of classes A, B, C, D and/or properties R, S, T and axioms, for example ax1, ax2, ax3, about classes A, B, C, D and/or properties R, S, T.

Component 50 comprises a reasoning component for example a semantic reasoner, also known as reasoning engine, rules engine, or simply as a reasoner, which is used for processing step 130 for computing inconsistency in the second data set KG' with regard to the ontology O, in particular with regard to the axioms ax1, ax2, ax3 of said ontology O by inferring logical consequences from the second data set KG' and axioms in the ontology O.

Component 60 comprises an outputting device for outputting inconsistency explanations E' for the second data set KG'. An example for such an inconsistency explanations E' is given by figure 6.

Preferably, the method further comprises the step of outputting of inconsistency explanations for said first data set and/or inconsistency explanations for said second data set in a comprehensible format. As an example, figure 6 presents one inconsistency explanation E' for the second data set and three corresponding inconsistency explanations E1, E2, E3 for the first data set, wherein the ontology axioms ax1, ax2, and ax3 are not shown.

Component 70 comprises a processing component suitable for processing step 140 of computing inconsistency explanations E for said first data set KG based on said computed inconsistency explanations E' in said second data set KG'.

Component 80 comprises an outputting device for outputting inconsistency explanations E for the first data set KG. An example for such an inconsistency explanations E1, E2, E3 are given by figure 6.

Preferably, inconsistency explanations E1, E2, E3 for said first data set KG are obtained from corresponding inconsistency explanations E' for the said second data set KG'. A possible explanation is given for example by axioms ax1, ax2, ax3 of the ontology O, figure 5b.

Preferably, the components 10, 20, 30, 40, 50, 60, 70, 80 are means of the apparatus 200 for carrying the method 100 according to the embodiments.

The terminology "compression" with regard to second data set being a compressed abstract description of first data set KG, is used to emphasize the size reduction achieved when constructing 120 the second data set KG'.

An important property of the present invention is, that the requirements R1-R2 as described above are satisfied. Proof of this property is provided below.

Preliminaries

A knowledge graph KG is a finite set of unary and binary facts of the form C(a) and R(a,b), where $C \in N_C$, $R \in N_P$ and $a, b \in N_I$, e.g., PopularName(Nokia) or hasCustomer(McAfee,Nokia), wherein $N_C$, $N_P$, $N_I$ are countable pairwise disjoint sets of class names, e.g., Company, property names, e.g., hasCustomer and individuals, e.g., Toyota. Ind(KG) denotes the sets of individuals occurring in the first data set KG.

The ontology O encompasses a representation, formal naming and definition of the individuals, classes and properties that substantiate a respective domain of discourse. The ontology O comprises a formal explicit description of classes and/or properties and axioms about said classes and/or properties.

According to the present invention, the first data set KG and/or the ontology O is defined based on a web ontology language, W3C Web Ontology Language, OWL, such as OWL 2. The W3C Web Ontology Language, OWL, is a language designed to represent rich and complex knowledge about things, groups of things, and relations between things. OWL is a computational logic-based language such that knowledge expressed in OWL can be exploited by computer programs. For further specification with regard to the Web Ontology Language OWL 2 reference is made to https://www.w3.org/TR/owl2-overview/.

According to the present invention, the semantics of the first data set KG and/or the ontology O is defined using the OWL 2 direct model-theoretic semantics via interpretations, wherein reference is made to https://www.w3.org/TR/owl2-direct-semantics/ with regard to direct model-semantics.

From class and property names complex classes C and properties P can be (recursively) defined following the OWL 2 specification. In this work, the following types of classes and properties are considered:

```
P(i) ::= R | ObjectlnverseOf(P)
C(i) ::= owl: Thing | owl: Nothing | A | ObjectComplementOf(C) |
    ObjectIntersectionOf(C1,C2) | ObjectUnionOf(C1, C2) |
        ObjectSomeValuesFrom(P, owl: Thing),
```

wherein $A \in N_C$, $R \in N_P$, C1, C2 are classes and P is a property.

Class and property names are used to define axioms that formally describe the domain of interest. In the present invention, three types of OWL 2 axioms are considered: Sub class and sub property axioms of the form SubClassOf(C, D), and SubObjectPropertyOf(P, S) specify hierarchies, partial relations; Transitive properties are defined by axioms of the form TransitiveObjectProperty(P).

It should be noted that this ontology language is quite expressive. Indeed, it allows to express other types of important OWL 2 axioms such as:

DisjointClasses, InverseObjectProperties, ObjectPropertyDomain, ObjectPropertyRange. For example, the axiom ObjectPropertyRange(hasCustomer, Company) of figure 5a can be equivalently expressed by SubClassOf(ObjectSomeValuesFrom(ObjectlnverseOf(hasCustomer),owl:Thing), Company).

The semantics of knowledge graphs and ontologies is defined using the OWL 2 direct model theoretic semantics via interpretations. The first data set KG is inconsistent with regard to the ontology O if no model for KG $\cup$ 0 exists. The first data set KG is inconsistent with regard to the ontology O, KG $\cup$ 0, when at least one fact of KG contradicts at least one axiom of O.

An explanation E for inconsistency of KG $\cup$ 0 denoted by E = $E_{KG} \cup E_O$ with $E_{KG} \subseteq$ KG and $E_O \subseteq$ 0, is a smallest subset inclusion inconsistent subset of KG $\cup$ 0. For instance, the particular part of the first data set KG stating that "McAfee hasCustomer Toyota" and "Toyota isCityOf Japan" together with the three examples of ontology axioms ax1, ax2, ax3, figure 5a, is an inconsistency explanation , as depicted by figure 6. In general, inconsistency of KG $\cup$ 0 may have multiple explanations.

Computing Explanations for inconsistency of the first data set KG

For better understanding modules are introduced to characterize an individual a $\in$ ind(KG). Given a first data set KG and an individual a $\in$ ind(KG), the module of a with regard to KG is the set of facts in which a participates, i.e. M(a, KG) = {$\alpha$ | $\alpha \in$ G and a occurs in $\alpha$}. Referring to figure 5a, the module of Nokia is M(Nokia, KG) = {PopularName(Nokia), hasCustomer(McAfee, Nokia), isCityOf(Nokia, Finland)}.

Figure 4 depicts a high-level overview of the method according to the invention. In step 110 for every individual of the first data set KG a module M is constructed. In step 120 commonalities across the modules M are detected using local types and the abstractions of maximal local types, also referred to as second data set KG', are computed. As it is proved below, the union of abstractions of all modules gives an abstraction for the whole first data set KG, wherein the abstraction of the first data set KG, the second data set, is preferably much smaller than the original first data set KG. Step 130 takes as input the ontology O and the computed abstractions and invokes an off-the-shelf reasoner, e.g. Pellet, for generating inconsistency explanations for the abstract modules, which are patterns for inconsistency explanations for the original first data set KG. Finally, in step 140 explanations for the original first data set KG are reconstructed from those computed in step 130. In the following, technical details of the described approach are provided.

$N_V$ represents a countable set of representative variables that is disjoint from $N_C$, $N_P$, $N_I$. The second data set KG' is an abstract description of the first data set KG, in which only variables, classes and properties, but no individuals occur. Consequently, the second data set KG' is a finite set of unary and binary facts, for example A(u), B(w), C(v), D(x) and R(u, v), S(v, w), T(x, w).

The abstract second data set KG' is inconsistency preserving for the first data set KG when KG' is consistent with regard to the ontology O if and only if KG is consistent with regard to the ontology O. The abstract second data set KG' is explanation preserving for KG if for every inconsistency explanation E of KG there exists an inconsistency explanation E' of KG such that E' can be homomorphically mapped to E. An inconsistency and explanation preserving abstract second data set KG' for KG is called an abstraction of KG. Clearly, an abstraction of any first data set KG satisfies the requirements R1 and R2. For the considered ontology language the problem of checking inconsistency for the first data set KG can be reduced to checking inconsistency for every module of the first data set KG considered in isolation.

Lemma 1: Let KG be a first data set and O an ontology. Then KG $\cup$ 0 is consistent if and only if M(a, KG) $\cup$ 0

is consistent for every a ∈ ind(KG).

Lemma 1 guarantees that all explanations for inconsistency of a first data set KG can be obtained by computing explanations for its modules.

Theorem 2: Let KG be a first data set and O an ontology such that KG ∪ 0 is inconsistent. Then, E is an explanation for inconsistency of KG ∪ 0 if and only if there exists a ∈ ind(KG) such that M(a, KG) ∪ 0 is inconsistent and E is an explanation for the inconsistency of M(a, KG) ∪ 0.

Theorem 3.2 allows computing inconsistency explanations for a first data set KG on its modules, even without abstractions, which gives a significant speed-up over the baseline. More importantly, theorem 2 suggests to compute explanation preserving abstractions, first, locally on individual modules, and then to combine the resulting abstractions in a global one for the whole KG.

A local type of an individual a of a first data set KG is the set of concepts and properties that mention it. Formally, a local type $\tau$ of an individual a of first data set KG, $\tau$(a, KG) is defined by a tuple $\tau$(a) = $\langle \tau_i(a), \tau_c(a), \tau_o(a) \rangle$, where $\tau_i(a)$ = {R|R(c, a) ∈ KG}, $\tau_c(a)$ = {A|A(a) ∈ KG} and $\tau_o(a)$ = {S|S(a,b) ∈ KG}. It is referred to $\tau$, whenever the individual of the local type is irrelevant.

Each local type is a set of classes and properties wherein an abstract description of the first data set KG instantiates them with variables so that the abstract set of classes and properties has preferably a star shape. Let $\tau$ be a local type, the star-abstraction for $\tau$ is defined as the following knowledge graph based on variables:

$$\text{abs}(\tau) = \{A(v_\tau)|A \in \tau_c\} \cup \{R(u_\tau^R, v_\tau)\big|R \in \tau_i\} \cup \{S(v_\tau, w_\tau^S)\big|S \in \tau_o\},$$

wherein $v_\tau$, $u_\tau^R$, $w_\tau^S$ are unique variables from $N_v$ for each $\tau$, R, S.

To simplify the notation, subscripts and superscripts of individuals in star-abstractions can be omitted. Referring to the example of figure 5a, Toyota and Nokia have the same local type $\tau$ =$\langle$\{PopularName\}, \{hasCustomer\}, \{isCityOf\}$\rangle$. The star-abstraction for $\tau$ is abs($\tau$)={PopularName(v), hasCustomer (u,v), isCityOf (v,w)}. For the method according to the present invention, preferably only local types that are maximal in the set of all local types of all individuals in the first data set are considered.

A local type $\tau$' = $\langle \tau'_i, \tau'_c, \tau'_o \rangle$ is superior to a local type $\tau$ = $\langle \tau_i, \tau_c, \tau_o \rangle$ if and only if $\tau_i \subseteq \tau'_i$, $\tau_c \subseteq \tau'_c$, $\tau_o \subseteq \tau'_o$. A local type $\tau$ is smaller than local type $\tau$" = $\langle \tau''_i, \tau''_c, \tau''_o \rangle$, if and only if $T_i \subset \tau''_i$, $\tau_c \subset \tau''_c$, $\tau_o \subset \tau''_o$. A local type $\tau_{max}$ is maximal in a set of local types if and only if $\tau_{max}$ is not smaller than any other local type in that set. It can be shown that for a local type $\tau$ and a local type $\tau$' such that $\tau$ is smaller than $\tau$', for every ontology O, if abs($\tau$) ∪ O is inconsistent then abs($\tau$') ∪ 0 is also inconsistent and inconsistency explanations of abs($\tau$') ∪ 0 include all those of abs($\tau$) ∪ 0. Thus, smaller types are irrelevant for computing explanations.

Finally, a realization that allows going from inconsistency explanations for abstractions to inconsistency explanations for the original KG is defined. Formally, let KG be a first data set and $\tau$ a local type. A realization of $\tau$ for an individual a ∈ ind(G) is an inclusion-smallest subset $real_{a,\tau}$ of KG such that $\tau$ (a, $real_{a,\tau}$) = $\tau$. The realization of $\tau$ in KG is the set of all realizations of $\tau$ for each individual occurring in KG. Referring now to figure 6, an abstraction for individuals Toyota and Nokia, an inconsistency explanation computed for this abstraction, and three realizations of the local type of v in this explanation are presented.

Algorithm 1, as presented below computes all explanations for the first data set KG with regard to an ontology O using an abstraction of the first data set KG. Since the algorithm iterates over local types, whose number is bounded by |ind(KG)|, and the number of explanations for abstractions as well as the number of realizations for types are bounded by the signature of the first data set KG and the ontology O, algorithm 1 terminates. The following theorem shows its correctness.

Theorem 3. Given a first data set KG and an ontology O as inputs for algorithm 1, $U_{a \in ind(KG)}$ abs($\tau$ (a)) is an abstraction of KG and the returned set allExpls consists of all inconsistency explanations for the first data set KG with regard to ontology O.

*Algorithm 1: Computing explanations for inconsistency of a first data set KG with regard to an ontology O*

/\*Input: A first data set KG and an ontology O

Output: The set allExpls of all explanations for inconsistency of $KG \cup O$\*/

allExpls $\leftarrow \emptyset$

/\* compute local types of all individuals occurring in KG \*/

types $\leftarrow \{\tau\,(a, KG) \mid a \in ind(G)\}$

for each maximal $\tau \in$ types do

{

/\* compute explanations for the abstraction of $\tau$ using a reasoner \*/

$X \leftarrow$ all explanations for inconsistency of $abs(\tau) \cup O$

/\* obtain the explanations for KG \*/

for each $E = E_{KG} \cup E_O \in X$ do

{

/\* compute the local type of $v_\tau$ in $E_{KG}$ \*/

$\tau' = \tau\,(v_\tau, E_{KG})$

newExpls $\leftarrow$ all realizations of $\tau'$ in KG

allExpls $\leftarrow$ allExpls $\cup$ newExpls

}

}

return allExpls

The method for computing inconsistency explanations has been implemented in a system prototype and evaluated on the DBpedia knowledge graph, which comprised 22,955,173 facts at that time, with its latest ontology, which comprised 4,287 axioms at that time, further specified in https://wiki.dbpedia.org/downloads-2016-10. The abstraction based method 100 presented in algorithm 1, has been compared with the module-based implementation M and off-the-shelf reasoner Pellet P, in which a knowledge graph is processed as a whole. All experiments were performed on a server with 48 cores and 500GB of memory, and Pellet reasoner was invoked for computing inconsistency explanations. A timeout of 72 hours for the overall computations and 5 minutes for processing every module was set.

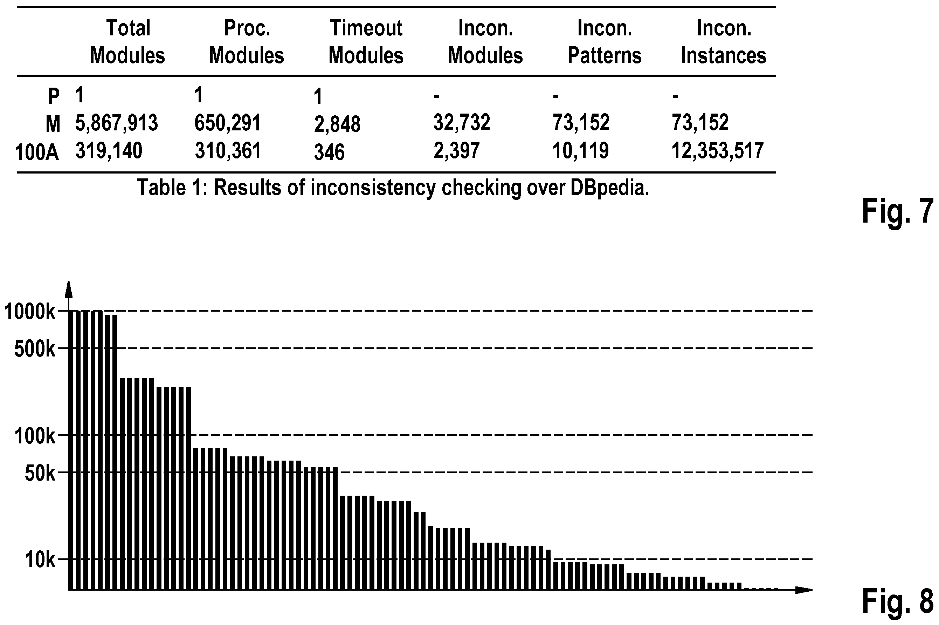

Figure 7 depicts a table which presents the total number of modules computed by every method, the number of those that were attempted to be processed within 72 hours and out of them those that failed to be analyzed within 5 minutes. Moreover, the number of computed explanation patterns together with the actual explanations that they yield is presented.

Within 72 hours, using Pellet P without the method 100 no explanation for DBpedia was obtained. Splitting the knowledge graph into smaller modules, implementation M is already beneficial and results in more than 73K explanations. However, the number of computed modules is still very large, and many of them cannot be processed within the timeout. On the other hand, the number of abstract modules computed by the abstraction-based method 100 is much smaller, and they are easier to handle, which is witnessed by a small number of timeout modules. The abstract knowledge graph contains only 2,497,521 facts, corresponding to just 10% of the original KG, which shows significant data compression. As a result, a dramatic increase in the number of computed explanations is observed, demonstrating the effectiveness of method 100 compared to the baselines.

Figure 8 depicts the top 100 most frequent explanation patterns, X-axis, and the number of explanations that they produce, Y-axis. Some patterns result in millions of explanations, revealing systematic issues in the information extraction process. For example, in DBpedia, there are about 10K inconsistency explanations with the explanation pattern: {bandMember(u,v), playInstrument(w,v)}, where the range of bandMember and playsInstrument based on the ontology are Person and Instrument, respectively, which are mutually disjoint classes. While due to the limited computational resources, not all of the modules have been processed by either of the methods, the results show that our abstraction-based approach significantly outperforms the baselines with respect to the number of computed inconsistency explanations, and the obtained explanation patterns effectively summarize the inconsistency of the knowledge graph.

Moreover, the method 100 provides error patterns which could reveal systematic issues in the knowledge graph construction process.

According to a further embodiment the present invention relates to the use of the method 100 according to the previous described embodiments and/or a computer program according the previous described embodiments for data cleaning of a first data set KG. The quality of the first data set can be improved by efficiently detecting abnormality and/or errors in the data set as is described above with respect to various embodiments.

**Claims**

1. A computer-implemented method (100) for computing inconsistency explanations (E) in a first data set (KG) enhanced with an ontology (O), the first data set (KG) comprising data elements, called individuals (a, b, d, e, f, g, h), and facts about said individuals; wherein said facts are expressed according to an ontology language in terms of class assertions (C(a), C(d), B(f), B(g)) and/or property assertions (R(a, b), S(d, f), T(f, h)), wherein a class assertion relates one individual (a, b, d, e, f, g, h) with a class (A, B, C, D) and a property assertion relates one individual (a, b, d, e, f, g, h) with a second individual (a, b, d, e, f, g, h), the ontology (O) comprising a formal explicit description of said classes (A, B, C, D) and/or said properties (R, S, T) and further comprising axioms (ax1, ax2, ax3) about said classes (A, B, C, D) and/or properties (R, S, T);
wherein the method comprises the steps of:

   constructing (120) a second data set (KG') being an abstract description of said first data set (KG);
   computing (130) inconsistency explanations (E') in said second data (KG') set with regard to said axioms of said ontology (O), and
   computing (140) inconsistency explanations (E) for said first data set (KG) with regard to said ontology (O) based on said computed inconsistency explanations (E') in said second data set (KG').

2. The method (100) according to claim 1, wherein the step (120) of constructing the second data set (KG') further comprises constructing abstract class assertions (A(u), B(w),C(v), D(x)) and/or abstract property assertions (R(u, v), S(v, w), T(x, w)) about said individuals (a, b, d, e, f, g, h) of said first data set (KG), wherein said abstract class assertions (A(u), B(w), C(v), D(x)) comprise an abstract description of said class assertions (C(a), C(d), B(f), B(g)) and/or said abstract property assertions (R(u, v), S(v, w), T(x, w)) comprise an abstract description of said property assertions (R(a, b), S(d, f),T(f, h)) based on representative variables (u, v, w, x) of said individuals (a, b, d, e, f, g, h), wherein individuals (a, b, d, e, f, g, h) occurring in similar class assertions (C(a), C(d), B(f), B(g)) and/or similar property assertions (R(a, b), S(d, f),T(f, h)) are represented by the same representative variable (u, v, w, x).

3. The method (100) according to any of the previous claims, wherein the method (100) further comprises the step of identifying (112, 122) at least one local type ($\tau$) for at least one of the individuals (a, b, d, e, f, g, h) and/or an abstraction (abs($\tau$)) for the at least one local type, wherein a local type ($\tau$) consists of a set of classes occurring in class assertions (C(a), C(d), B(f), B(g)) of said individual (a, b, d, e, f, g, h) and/or sets of properties occurring in property assertions (R(a, b), S(d, f), T(f, h)) of said individual (a, b, d, e, f, g, h) and wherein the abstraction (abs($\tau$)) for the at least one local type ($\tau$) is based on representative variables (u, v, w, x).

4. The method (100) according to any of the previous claims, wherein the method (100) further comprises the step of identifying (114, 124) at least one superior local type ($\tau$') for at least one of the individuals (a, b, d, e, f, g, h), for example a maximal local type ($\tau_{max}$), and/or at least one abstraction (abs($\tau$')) for the superior local type ($\tau$'), for example an abstraction (abs($\tau_{max}$)) for the maximal local type ($\tau_{max}$), wherein a superior local type ($\tau$') is superior to the local type ($\tau$) of said individual (a, b, d, e, f, g, h) if each set of classes and/or each set of properties in said superior local type ($\tau$') includes the corresponding set of classes and/or corresponding set of properties in the local type ($\tau$) of said individual (a, b, d, e, f, g, h), and wherein the abstraction (abs($\tau$')) for the superior local type ($\tau$') is based on representative variables (u, v, w, x).

5. The method (100) according to any of the previous claims, wherein the step of constructing (120) the second data set (KG') further comprises constructing (126) at least one abstraction $(abs(\tau'))$ for a superior local type of at least one of the individuals (a, b, d, e, f, g, h), for example an abstraction $(abs(\tau_{max}))$ for a maximal local type, wherein the abstraction $(abs(\tau'))$ for a superior local type $(\tau')$ and/or the abstraction $(abs(\tau_{max}))$ for a maximal local type $(\tau_{max})$ is based on representative variables (u, v, w, x) of said individuals (a, b, d, e, f, g, h), wherein individuals (a, b, d, e, f, g, h) occurring in similar class assertions (C(a), C(d), B(f), B(g)) and/or similar property assertions (R(a, b), S(d, f), T(f, h)) are represented by the same representative variable (u, v, w, x).

6. The method (100) according to any of the previous claims, wherein the step of computing (130) inconsistency explanations (E') in said second data set (KG') further comprises computing (132) inconsistency explanations (E') in said abstraction $(abs(\tau')$ for a superior local type $(\tau')$, for example in said abstraction $(abs(\tau_{max}))$ for a maximal local type $(\tau_{max})$ and/or said abstraction $(abs(\tau))$ for a local type $(\tau)$.

7. The method (100) according to any of the previous claims, wherein the method (100) further comprises the step of dividing (110) said data elements of said first data set (KG) in a plurality of modules (M), wherein each module (M) is associated with one respective individual (a, b, d, e, f, g, h) and comprises the entirety of class assertions (C(a), C(d), B(f), B(g)) and/or property assertions (R(a, b), S(d, f), T(f, h)) of said individuals (a, b, d, e, f, g, h), wherein the step of constructing (120) said second data set (KG') being an abstract description of said first data set (KG) is based on said modules (M).

8. The method (100) according to any of the previous claims, wherein the method (100) further comprises the step of outputting of inconsistency explanations (E) for said first data set (KG) and/or inconsistency explanations (E') for said second data set (KG') in a comprehensible format.

9. The method (100) according to any of the previous claims, wherein inconsistency explanations (E) for said first data set (KG) are obtained from corresponding inconsistency explanations (E') for the said second data set (KG').

10. The method (100) according to any of the previous claims, wherein the first data set (KG) and/or the ontology (O) is defined based on a web ontology language, W3C Web Ontology Language, OWL, such as OWL 2.

11. The method (100) according to claim 10, wherein the ontology (O) enhancing the first data set (KG) contains at least one of the following axioms of OWL 2 axioms: a subclass axiom SubClassOf(C, D), specifying that class C is a subclass of class D, a subproperty axiom SubObjectPropertyOf(P, S), specifying that P is a sub property of S, or transitive property axiom TransitiveObjectProperty(P), wherein $C_{(i)}$ and $P_{(i)}$, $i \in \{1, 2\}$, satisfy the following grammar definition:
$P_{(i)}$ ::= R | ObjectInverseOf(P) $C_{(i)}$ ::= owl: Thing | owl: Nothing | A | ObjectComplementOf(C) | ObjectIntersectionOf($C_1, C_2$) | ObjectUnionOf($C_1, C_2$) | ObjectSomeValuesFrom(P, owl: Thing),
wherein R is a property name and A is a class name.

12. A computer program comprising computer program code, the computer program code when being executed on a computer enabling said computer to carry out the method (100) according to any of the claims 1 to 11.

13. An apparatus (200) for computing inconsistency explanations (E) in a first data set (KG) enhanced with an ontology (O), the first data set (KG) comprising data elements, called individuals (a, b, d, e, f, g, h), and facts about said individuals, wherein said facts are expressed according to an ontology language in terms of class assertions (C(a), C(d), B(f), B(g)) and/or property assertions (R(a, b), S(d, f), T(f, h)), wherein a class assertion relates one individual (a, b, d, e, f, g, h) with a class (A, B, C, D) and a property assertion relates one individual (a, b, d, e, f, g, h) with a second individual (a, b, d, e, f, g, h), the ontology (O) comprising a formal explicit description of said classes (A, B, C, D) and/or said properties (R, S, T) and further comprising axioms (ax1, ax2, ax3) about said classes (A, B, C, D) and/or properties (R, S, T); the apparatus (200) comprising:

means (30) for constructing (120) a second data set (KG') being an abstract description of said first data set (KG);
means (50) for computing (130) inconsistency explanations (E') in said second data (KG') set with regard to said axioms of said ontology (O), and
means (70) for computing (140) inconsistency explanations (E) for said first data set (KG) with regard to said ontology (O) based on said computed inconsistency explanations (E') in said second data set (KG').

14. The apparatus (200) according to claim 13, further comprising means for carrying out the method according to any of the claims 2 to 11.

15. Use of a method (100) according to any of the claims 1 to 11 and/or a computer program according to claim 12 and/or an apparatus (200) according to any of the claims 13 and 14 for data cleaning of a first data set (KG) enhanced with an ontology (O).

100

110

120

130

140

**Fig. 1**

100

112

114

126

132

140

**Fig. 2**

100

122

120

124

132

140

**Fig. 3**

Fig. 4

process flow

- - - - - data flow

KG

PopularName —C
Toyota
d

S
isCityof

Country —B
Japan
f

McAffee
b

hasCustomer —R

hasCustomer —R

a

S
isCityof

locatedIn

g

R —hasCustomer

Nokia
PopularName —C

Finnland
B —Country

Asia
h

e —IBM

**Fig. 5a**

A

O ⟶

ax1: ObjectPropertyRange (hasCustomer, Company)
ax2: ObjectPropertyDomain (isCityof, City) —D
ax3: DisjointClasses (City, Company, Country)

A            B

**Fig. 5b**

Abstraction for the local type of Toyota and Nokia

u —— hasCustomer ——▶ v(PopularName) —— isCityof ——▶ w

The explanation for inconsistency E' of the abstraction

u —— hasCustomer ——▶ v —— isCityof ——▶ w

Explanations E1, E2, E3 for inconsistency of the first data set KG

E1  McAffee —— hasCustomer ——▶ Toyota —— isCityof ——▶ Japan

E2  McAffee —— hasCustomer ——▶ Nokia —— isCityof ——▶ Finnland

E3  IBM —— hasCustomer ——▶ Nokia —— isCityof ——▶ Finnland

Fig. 6

EP 3 783 542 A1

| | Total Modules | Proc. Modules | Timeout Modules | Incon. Modules | Incon. Patterns | Incon. Instances |
|---|---|---|---|---|---|---|
| P | 1 | 1 | 1 | - | - | - |
| M | 5,867,913 | 650,291 | 2,848 | 32,732 | 73,152 | 73,152 |
| 100A | 319,140 | 310,361 | 346 | 2,397 | 10,119 | 12,353,517 |

Table 1: Results of inconsistency checking over DBpedia.

**Fig. 7**

EP 3 783 542 A1

**Fig. 8**

Europäisches
Patentamt

European
Patent Office

Office européen
des brevets

# EUROPEAN SEARCH REPORT

Application Number

EP 19 19 3225

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PAULHEIM HEIKO ET AL: "Serving DBpedia with DOLCE - More than Just Adding a Cherry on Top", 30 October 2015 (2015-10-30), INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 180 - 196, XP047413306, ISBN: 978-3-642-17318-9 [retrieved on 2015-10-30] * abstract; Sections 1-4 * | 1-15 | INV. G06N5/02 G06N5/04 |
| A | GLIMM BIRTE ET AL: "Scalable Reasoning by Abstraction Beyond DL-Lite", 26 August 2016 (2016-08-26), INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 77 - 93, XP047353297, ISBN: 978-3-642-17318-9 [retrieved on 2016-08-26] * abstract; Sections 1-4 * | 1-15 | |

-----

-----

TECHNICAL FIELDS
SEARCHED      (IPC)

G06N

The present search report has been drawn up for all claims

| Place of search | Date of completion of the search | Examiner |
|---|---|---|
| The Hague | 25 February 2020 | Klasen, TJ |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)